# EUROPEAN PATENT APPLICATION

(11) **EP 1 703 000 A1**
(43) Date of publication of application: **20.09.2006**
(21) Application number: 05700399.8
(22) Date of filing: 07.01.2005
(51) Int. Cl.: C23C 22/00, C23C 22/06, C23C 22/53

(54) **CHROME-FREE PASSIVATING SOLUTION**

(30) Priority: 08.01.2004 CN 200410021031
(71) Applicant: China International Marine Containers (Group) Co., Ltd., Guangdong 518067 (CN)
(72) Inventor: HUANG, Kekun, CIMC R & D Center, Shenzhen, Guangdong 518067 (CN)
(74) Representative: Vignesoult, Serge L. M.
(86) International application number: PCT/CN2005/000024
(87) International publication number: WO 2005/068683

(57) **Abstract**

The present invention related to a chrome-free passivating solution, whichcomprises following components: effective amount of oxysalt containing transition metal, inorganic acids and water. Said oxysalt containing transition metal is selected from a group of oxysalt containing titanium, oxysalt containing zirconium, oxysalt containing hafnium, oxysalt containing vanadium, oxysalt containing niobium, oxysalt containing tantalum, oxysalt containing molybdenum, oxysalt containing tungsten, oxysalt containing manganese, oxysalt containing technetium, and oxysalt containing rhenium, and the weight ratio between said oxysalt containing transition metal and inorganic acids is in the range of 200~400:1. Said chrome-free passivating solution may further comprise one or more complexant. The problem that noxious hexad and trivalent chrome existing in the galvanizing coat and passivating solution of the prior art is solved substantially by the chrome-free passivating solution of the present invention, and said chrome-free passivating solution of the present invention can replace really the passivating solution containing hexad and trivalent chrome of prior art, to complete the passivation of electro-galvanizing coat and hot-galvanizing coat.

## Description

### Field of the Invention

The present invention relates to a passivating solution, and more particularly to a chrome-free passivating solution.

### Description of Prior Art

Electro-galvanizing coat or hot-galvanizing coat must be passivated to enhance the corrosion resistance and to achieve a decorative appearance. At present, passivation for electro-galvanizing coat and hot-galvanizing coat is generally conducted by using chromate passivating solution, with a simple passivating process and low cost, to greatly improve the corrosion resistance of galvanizing coat of steel piece. However, either passive film formed by means of chromate passivation or waste chromate passivating solution contains hexad chrome, which is seriously harmful for human healthy and environment protection. It has been clearly prescribed by Chinese government that the waste chromate passivating solution must be treated before being discharged out. Many industrial sectors both in the country and abroad such as automobile, electronics, home appliance etc. also have stipulated to prohibit hexad chrome from being contained in the galvanizing coat after a certain time limit, even trivalent chrome is also prohibited to be contained in the galvanizing coat in some enterprises. Therefore, tremendous efforts have been made to provide a chrome-free passivating method in which no chromate passivating solution need to be used.

A chrome-free passivating solution has been disclosed in a China Patent Application No. 00114178, titled "Chrome-free passivating solution used for protecting galvanizing coat and its coating method". The chrome-free passivating solution is prepared by "innocuous soluble molybdenate selected as inhibitor and innocuous water-soluble acrylic ester solution". Although the passivating solution is chrome-free, it is unable to replace the conventional chromate passivating solution, because the passivating solution must be coated on clean surfaces of galvanized pieces to form surface resin coat rather than really passivating the galvanizing coat. It is impossible to use the conventional chromate passivating equipment for said chrome-free passivating solution of above-mentioned application, so investment cost for equipment will be increased. Furthermore, the surface resin coat easily flakes off from the galvanizing piece so as to decrease its corrosion resistance and surface decorative effect. So far, there is no real chrome-free passivating solution, which can replace the chromate passivating solution.

### SUMMARY OF THE INVENTION

The objective of the present invention is to provide a chromate-free passivating solution, which can replace the conventional chromate passivating solution for being used in the process of passivating the galvanizing coat, with substantially the same corrosion resistance as that provided by hexad chrome passivating process.

To achieve the object of the present invention, the present invention provides a chrome-free passivating solution, which comprises the following components:
Passivating effective amount of oxysalt containing transition metal , inorganic acids; and
water;
wherein said oxysalt containing transition metal is selected from a group consisting of oxysalt containing titanium, oxysalt containing zirconium, oxysalt containing hafnium, oxysalt containing vanadium, oxysalt containing niobium, oxysalt containing tantalum, oxysalt containing molybdenum, oxysalt containing tungsten, oxysalt containing manganese, oxysalt containing technetium, and oxysalt containing rhenium, and
the weight ratio between said oxysalt containing transition metal and inorganic acid is in the range of 200~400:1.

The term "transition metal " means chemical elements from IIIB family to VIII family of the periodic system of elements. The transition metal in the present invention include chemical elements of IVB family, VB family, VIB family and VIIB family of the periodic system of elements. Preferably, said transition metal is manganese, titanium, molybdenum, vanadium and zirconium.

The oxysalts of the present invention are salt compounds being composed of various complex anion of oxy acid and metal cation or ammonium ion. Said oxysalts containing transition metal are salt compounds being composed of various transition metals and oxysalts, such as potassium permanganate, ammonium molybdate, sodium metavanadate, titanyl sulfate etc., preferably, alkali salt, ammonium salt or titanium salt containing aforementioned transition metal.

The oxysalts containing transition metal are at least one or two selected from a group consisting of oxysalt containing titanium, oxysalt containing manganese, oxysalt containing molybdenum, oxysalt containing vanadium and oxysalt containing zirconium. Namely, the oxysalts can be individually used in the invention; alternatively, a mixture of above two oxysalts can be used in the invention. In practice, those skilled in the art can use a mixture of above three oxysalts in the invention according to the requirement. In associated using, the above two salts can be mixed before the passivating solution is prepared. Alternatively, the passivating solution can be directly prepared without pre-mixing. The passivating solutions prepared by the two manners are identical.

Preferably, two oxysalts containing transition metal are used, of which the weight ratio between the two oxysalts is in the range of 35~45:1. In an embodiment of the invention, the weight ratio between ammonium molybdate and potassium permanganate is 35:1. In this embodiment, the weight ratio between ammonium molybdate and potassium permanganate also can be 1:35.

The chromate-free passivating solution further contains one or more silicates, preferably, alkali silicates or ammonium silicate, such as sodium silicate, potassium silicate or ammonium silicate etc. The chromate-free passivating solution is compounded of one or more salts containing transition metal and the silicates. Preferably, the weight ratio between the oxysalt containing transition metal and the silicates is 35~45:1. In an embodiment, ammonium molybdate and sodium silicate are mixed in accordance with the weight ratio of 45:1.

Because, in the prior art, the chromate passivating solution was used, ether the passive film formed by the passivation and waste chromate passivating solution contains hexad chrome, which is seriously harmful for human healthy and environment protection. According to the evaluating criteria of galvanization and other waste liquid, waste liquid including Cr⁶⁺, Cr³⁺, Cu²⁺, Ni²⁺, Zn²⁺, S, As, CN⁻, Hg, Bb, F, benzene, nitrobenzene, phenyl amines, organic phosphorus, organo-chlorine, surfactant and suspended matter, must be treated before being discharged out. The oxysalts containing transition metal of the present invention is not in the list above. Therefore, compared with the prior art, the problem that noxious and harmful hexad and trivalent chrome is contained in the conventional galvanizing coat and passivating solution is solved substantially, and the harm of the hexad and trivalent chromes for human and environment is eliminated.

In the chromate-free passivating solution of the present invention, the inorganic acid can activate the surface of galvanizing coat so as to cause dissolution of metal and initiate the passivating process. Therefore, any inorganic, which can react with metal zinc of the surface of galvanizing coat to oxidate it to zinc ion, can be used in the present invention. Furthermore, other oxidants which can initiate oxidation reaction should also be included in scope of the present invention.

The inorganic acid according to the present invention is one or more selected from a group consisting of sulfuric acid, hydrochloric acid, nitric acid, boric acid, phosphoric acid, chlorosulfonic acid, hydrofluoric acid and glacial acetic acid. Preferably, the inorganic acids are two selected from a group of sulfuric acid, nitric acid, hydrochloric acid, and the weight ratio between the two inorganic acids is in the range of 7~10:1. In a specific embodiment of the present invention, the weight ratio between sulfuric acid and nitric acid or hydrochloric acid is 7~10:1. In this embodiment, the weight ratio between sulfuric acid and nitric acid or hydrochloric acid also can be 1:7~10.

The weight ratio between the oxysalts containing transition metal and inorganic acid should be 200~400:1. In the present invention, the weight ratio between the oxysalts containing transition metal and inorganic acid will effect the rate of the passivating reaction and the appearance of the passive film.

Furthermore, the chromate-free passivating solution of the present invention can contain one or more complexant. In the invention, the complexantis used for stabilizing metal ions of passivating solution to facilitate the passivating reaction. For example, the organic acid can be in complexation with the zinc ions dissolved in galvanizing coat surfaces to form a dissolvable complex so as to prevent zinc ions from compounding with hydroxide ions to form zinc hydroxide deposited on the surfaces, which is facilitates to form the passive film.

The complexing agents (complexing agent) can be one or more organic acids, or a mixture of organic acids and inorganic acids. Said organic acids not only includes citric acid, tartaric acid, pyrophosphate acid, nitrilotriacetic acid, ethylene diamine tetramethyl phosphoric acid (EPTMP), sulfonamic acid, carboxyl acetic acid, ethylene diamine tetraacetic acid(EDTA) etc., but also organic phosphoric acid containing hydroxy, such as hydroxyethylidene diphosphonate (HEDP), hydroxyl-propylidene-1,1-diphosphonic(HPDP), 2-hydroxy phosphonoacetic acid , 1-hydroxy -2-naphthoic acid, diethylidenetriamine pentamethylene phosphonic(DTPMP), 1-hydroxy-2-(3-pyridyl) ethane-1,1-diphosphonic, 2-hydroxy phosphonoacetic acid (HPAA), 1-hydroxy butylidene-1,1-diphosphonic acid (HBDP), 1-hydroxy-ethylidene-1,1-diphosphonic acid (HDEP), 1-hydroxy-hydroxy-diphosphonic acid, etc. The peroxide includes hydrogen peroxide, potassium peroxide and sodium peroxide etc.

In an embodiment of the invention, the complexing agent is a mixture of three organic acids, and the weight ratio of the three organic acids is 6:5:1. In another embodiment, the complexing agent is a mixture of pyrophosphate acid, nitrilotriacetic acid and sodium peroxide, and the weight ratio of pyrophosphate acid:nitrilotriacetic acid: sodium peroxide is 6:5:1. In another embodiment, the complexing agent is a mixture of citric acid, tartaric acid, pyrophosphate acid, and the weight ratio of citric acid: tartaric acid: pyrophosphate acid, is 6:5:1.

For successfully processing the passivating reaction with a rapid film-forming (passive film) rate, the pH value of the chromate-free passivating solution should be acidic. Preferably, the pH value of the chromate-free passivating solution is in the range of 1~3.

By means of filtering and optimizing formula, it is proved that when each liter of chromate-free passivating solution contains the following components, it has a good passivating effect.

| | |
|---|---|
| Formula: Component | one liter |
| Oxysalts containing transition metal 20~35g | |
| Inorganic acid | 0.05~0.15g |
| Water | rest amount |

In the formula, the oxysalts containing transition metal can be replaced with a mixture of oxysalts containing transition metal and silicates.

The formula can be further appended with 18~38g of complexing agent.

The chromate-free passivating solution of the present invention can be prepared through a conventional technology in the art. The detailed preparation method can refer to the preparation technology of the conventional chromate passivatings solution. For example, to prepare one liter of chromate-free passivating solution, salts, complexing agent and oxidant in a specific proportion indicated in the embodiment of the present invention are mixed, then water is added into the resulted mixture up to one liter volume, so that one liter of passivating solution with pH value of 1-3 is obtained.

The chromate-free passivating solution can be used for passivation of galvanizing coat. The operating condition for passivation is the same as used for the conventional chromate passivating solution. At the room temperature, firstly, cleaning the surface of galvanizing piece, then immerging the galvanizing coat of the galvanizing piece into the passivating solution for 4-10 seconds, after rinsing, drying and baking, a passive film with Cambridge blue and jade-green gradually form.

The longer time (passivating time) the galvanizing piece is immergedin the passivating solution , the thicker of passive film the galvanizing piece will have. But too thick passive film will have lower adhesive ability and unsatisfied luster. If the pH value is higher, the immerging time can last relative longer; while the temperature of the passivating solution is higher, the immerging time should be shorter. During passivation, the pH value of the passivating solution continuously ascends and the film-form rate consequently descends. When the pH value is high, it can be adjusted by adding nitric acid or sulfuric acid into the passivating solution. Anyway, in practice, those skilled in the art can adjust the processing condition according to the practical situation.

The salts containing molybdenum, manganese and titanium, complexing agent and inorganic acid are reacted with the galvanizing coat to form a layer of chromate-free passivating film with a multi-structure. After batch test of samples, the passivation processing technology is stable and feasible. By means of reliability test of corrosion resistance, it is completely conformity with the concerned criterion.

The salt-fog test result of galvanizing passivation shows that the corrosion resistance of galvanizing coat obtained according to the present invention is better than that of galvanizing coat obtained by the conventional blue-white passivating technology, and equal to that of galvanizing coat obtained by using the color passivating technology.

The present invention will be described in detail through the following preferred embodiments, which, by no means, is used to limit the present invention.

### DETAILED DESCRIPTION OF THE PREFERRED EMBODIMENT

Except for those specially indicated, all testing materials in the examples are available on the market, wherein sulfuric acid, nitric acid and hydrochloric acid are concentrated acid without being diluted.

### Preparation for Chromate-free Passivating Solution

### [Example 1]

Take 10g of potassium permanganate, 38g of citric acid, 0.15g of sulfuric acid, and mix these materials with water to prepare one liter of passivating solution with pH value of 1-3.

The passivation operating condition is the same as that of the conventional chromate passivating technology. Under the room temperature, the galvanizing coat is immerged in the passivating solution for 4-10 seconds, then rinsed, dried and baked to gradually form passive film with Cambridge blue and jade-green.

### [Example 2]

Take 20g of titanyl sulfate, 38g of citric acid, 0.15g of sulfuric acid, and mix these materials with water to obtain one liter of passivating solution with pH value of 1-3.

The passivation process is the same as the example 1.

### [Example 3]

Take 20g of ammonium molybdate, 38g of citric acid, 0.15g of sulfuric acid, and and mix these materials with water to obtain one liter of passivating solution with pH value of 1-3.

The passivation process is the same as the example 1.

### [Example 4]

Take 3402.78g of ammonium molybdate, 97.22g of potassium permanganate (i.e. the weight ratio between ammonium molybdate and potassium permanganate is 35:1), 1800g of tartaric acid, 5g of hydrochloric acid, and mix these materials with water to obtain 100 liters of passivating solution with pH value of 1-3.

The passivation process is the same as the example 1.

### [Example 5]

Take 195.65g of ammonium molybdate, 4.35g of sodium silicate (i.e. the weight ratio between the ammonium molybdate and sodium silicate is 45:1), 38g of diphosphoric acid, and 1.5g of nitric acid, and mix these materials with water to obtain 10 liters of passivating solution with pH value of 1-3.

The passivation process is the same as the example 1.

### [Example 6]

Take 3000g of salt made in accordance with the proportioning described in the example 1, 1000g of citric acid, 833g of tartaric acid, 167g of diphosphoric acid (i.e. the weight ratio among the citric acid, tartaric acid and diphosphoric acid is 6:5:1, and the total weight of the complexing agent is 2000g), 7g of nitric acid,and mix these materials with water to obtain 100 liters of passivating solution with pH value of 1-3.

The passivation process is the same as the example 1.

### [Example 7]

Take 3000g of salt prepared according to the proportion described in the example 5, 1000g of citric acid, 833g of tartaric acid, 167g of diphosphoric acid (i.e. the weight ratio among the citric acid, tartaric acid and diphosphoric acid is 6:5:1, and the total weight of the complexing agent is 2000g), 7g of nitric acid, and mix these materials with water to obtain 100 liters of passivating solution with pH value of 1-3.

The passivation process is the same as the example 1.

### [Example 8]

Take 3000g of salt (the same as example 1), 1000g of citric acid, 833g of tartaric acid, 167g of diphosphoric acid (i.e. the weight ratio among the citric acid, tartaric acid and diphosphoric acid is 6:5:1, and the total weight of the complexing agent is 2000g), 7g of hydrochloric acid, and mix these materials with water to obtain 100 liters of passivating solution with pH value of 1-3.

The passivation process is the same as the example 1.

### [Example 9]

Take 3000g of salt (the same as example 5), 1000g of citric acid, 833g of tartaric acid, 167g of diphosphoric acid (i.e. the weight ratio among the citric acid, tartaric acid and diphosphoric acid is 6:5:1, and the total weight of the complexing agent is 2000g), 7g of hydrochloric acid, and mix these materials with water to obtain 100 liters of passivating solution with pH value of 1-3.

The passivation process is the same as the example 1.

### [Example 10]

Take 2500g of salt (the same as example 1), 1250g of diphosphoric acid, 1042g of sodium triglycollamate, 208g of sodium peroxide (i.e. the weight ratio among the diphosphoric acid, sodium triglycollamate and sodium peroxide is 6:5:1, and the total weight of the complexing agent is 2500g), 5g of nitric acid, and mix these materials with water to obtain 100 liters of passivating solution with pH value of 1-3.

The passivation process is the same as the example 1.

### [Example 11]

Take 2500g of salt (the same as example 1), 1250g of diphosphoric acid, 1042g of ethylenediamine tetramethylphosphinic acid, 208g of sodium peroxide (i.e. the weight ratio among the citric acid, phosphines and sodium peroxide is 6:5:1, and the total weight of the complexing agent is 2500g), 5g of sulfuric acid, and mix these materials with water to obtain 100 liters of passivating solution with pH value of 1-3.

The passivation process is the same as the example 1.

### [Example 12]

Take 2500g of salt (the same as example 5), 1250g of diphosphoric acid, 1042g of ethylenediamine tetramethylphosphinic acid, 208g of sodium oxide (i.e. the weight ratio among the citric acid, phosphines and sodium peroxide is 6:5:1, and the total weight of the complexing agent is 2500g), 5g of nitric acid, and mix these materials with water to obtain 100 liters of passivating solution with pH value of 1-3.

The passivation process is the same as the example 1.

### [Example 13]

Take 2500g of salt (the same as example 5), 1250g of diphosphoric acid, 1042g of 1-hydroxyethylidene diphosphonate, 208g of sodium oxide (i.e. the weight ratio among the citric acid, phosphines and sodium oxide is 6:5:1, and the total weight of the complexing agent is 2500g), 5g of nitric acid, and mix these materials with water to obtain 100 liters of passivating solution with pH value of 1-3.

The passivation process is the same as the example 1.

### [Example 14]

Take 2500g of salt (the same as example 5), 1250g of diphosphoric acid, 1042g of 1-hydroxyethylidene diphosphonate, 208g of sodium oxide (i.e. the weight ratio among the citric acid, phosphines and sodium oxide is 6:5:1, and the total weight of the complexing agent is 2500g), 5g of hydrochloric acid, and mix these materials with water to obtain 100 liters of passivating solution with pH value of 1-3.

The passivation process is the same as the example 1.

### [Example 15]

Take 3000g of salt (the same as example 6), 2000g of complexing agent (the same as example 6), 0.625g of sulfuric acid, 4.375g of nitric acid (i.e. the weight ratio between the sulfuric acid and nitric acid is 7:1), and mix these materials with water to obtain 100 liters of passivating solution with pH value of 1-3.

The passivation process is the same as the example 1.

### [Example 16]

Take 2500g of salt (the same as example 9), 2500g of complexing agent (the same as example 9), 4.55g of nitric acid, 0.45g of hydrochloric acid (i.e. the weight ratio between the nitric acid and hydrochloric acid is 10:1), and mix these materials with water to obtain 100 liters of passivating solution with pH value of 1-3.

The passivation process is the same as the example 1.

### Performance Evaluation of Chromate-free Passivating Solution

### [Example 17] Salt-fog test of galvanizing passivation

The present test is used for evaluating corrosion resistance of chromate-free passivating solution according to the present invention, by comparing performances of corrosion resistance between the chromate-free passivation according to the present invention and galvanizing chromate passivation (including color passivation and blue-white passivation).

Preparation of samples: samples 1~3 are prepared according to the formula and process of chromate-free passivating solution of example 1; samples 4-6 are prepared according to the formula and process of chromate-free passivating solution of example 5; samples 7~10 are prepared according to the formula and process of a conventional low chromium passivating solution, wherein samples 7-8 are of chrome color passivation, and samples 9~10 are of chrome blue-white passivation.

The test is used for examining and evaluating corrosion resistance of galvanizing coat surface by means of salt-fog test. The salt-fog test (GB6485-1986, a destructive test) can reflect the corrosion resistance of tested product. The longer time the salt-fog test is conducted, the better corrosion resistance the tested product has.

The test period of the salt-fog test is 48 hours. All the samples are tested under the same test condition. The detailed test method refers to GB6458-1986 test standard. Test results are evaluated according to GB-12335-1990 rating standard.

The results are illustrated in list 1. The results indicate that the corrosion resistance of the galvanizing coat passivated according to the present invention is better than the corrosion resistance by using the conventional blue-white passivating technology, and is equal to the corrosion resistance by using the color passivating technology.

**List 1 Chromate-free passivation of galvanizing**

| Serial Number | Description Of Sample | Appearance Rating | Corrosion Rating | Corrosion Grade |
|---|---|---|---|---|
| 1 | Chromate-free passivation | B | 9 | B9 |
| 2 | Chromate-free passivation | B | 9 | B9 |
| 3 | Chromate-free passivation | B | 9 | B9 |
| 4 | Chromate-free passivation | B | 9 | B9 |
| 5 | Chromate-free passivation | B | 9 | B9 |
| 6 | Chromate-free passivation | B | 9 | B9 |
| 7 | Chrome color passivation | B | 10 | B10 |
| 8 | Chrome color passivation | B | 9 | B9 |
| 9 | Chrome blue-white passivation | F | 1 | F 1 |
| 10 | Chrome blue-white passivation | F | 1 | F1 |

### Industry Utility

Compared with the prior art, the present invention has the following advantages:
1. Compared with the prior art, the present invention substantially solves the problem that noxious hexad and trivalent chromes are present in the galvanized coat of the conventional products and the conventional passivating solution, and eliminate the harm of the hexad and trivalent chromes to human and environment.
2. The present invention can really replace the chromate passivating solution containing hexad and trivalent chrome to complete the passivation of electro-galvanizing coat and hot-galvanizing coat, and to solve the problem that the surface resin coat easily flakes off.
3. The corrosion resistance of galvanizing coat passivated to the present invention is better than the corrosion resistance by using the conventional blue-white passivating technology, and equal to that by using the color passivating technology.
4. The passivating solution of the present invention can be used with the conventional chromate passivating equipment so as to lower application cost of the passivating solution. The processing conditions such as temperature, time for passivating process is substantially the same as that of conventional chromate passivation, so tremendous cost for training staff members personnel is saved. Thus, the present invention has great economic benefit and social benefit .

The foregoing detailed description will be not used to limit the present invention. Various changes and modifications that may be made by those skilled in the art, within the spirit of the present invention, will be within the full extent indicated by the broad general meaning of the terms in which the appended claims are expressed.

## Claims

1. A chrome-free passivating solution, **characterized in that** said chrome-free passivating solution comprises the following components:
effective amount of oxysalt containing transition metal,
inorganic acids; and
water;
wherein said oxysalt containing transition metal is selected from a group consisting of oxysalt containing titanium, oxysalt containing zirconium, oxysalt containing hafnium, oxysalt containing vanadium, oxysalt containing niobium, oxysalt containing tantalum, oxysalt containing molybdenum, oxysalt containing tungsten, oxysalt containing manganese, oxysalt containing technetium, and oxysalt containing rhenium, and
the weight ratio between said oxysalt containing transition metal and inorganic acids is in the range of 200~400:1.

2. The chrome-free passivating solution as claimed in claim 1, **characterized in that** said chrome-free passivating solution further comprises a complexing agent.

3. The chrome-free passivating solution as claimed in claim 1, **characterized in that** said oxysalt containing transition metal is at least one or two selected from a group consisting of oxysalt containing titanium, oxysalt containing manganese, oxysalt containing molybdenum, oxysalt containing zirconium and oxysalt containing vanadium.

4. The chrome-free passivating solution as claimed in claim 3, **characterized in that** said oxysalt containing transition metal is a mixture of two salts, and a weight ratio between the two salts is in the range of 35~45:1.

5. The chrome-free passivating solution as claimed in claim 1, **characterized in that** the inorganic acid is one or more selected from sulfuric acid, nitric acid, and hydrochloric acid.

6. The chrome-free passivating solution as claimed in claim 5, **characterized in that** the inorganic acids are two selected from a group consisting of sulfuric acid, nitric acid, and hydrochloric acid, and the weight ratio between the two inorganic acid is 7~10:1.

7. The chrome-free passivating solution as claimed in claim 1 or 2, **characterized in that** the pH value of said chrome-free passivating solution is 1~3.

8. The chrome-free passivating solution as claimed in claim 1 or 2, **characterized in that** said chrome-free passivating solution further comprises one or more kinds of silicates.

9. The chrome-free passivating solution as claimed in claim 8, **characterized in that** said silicate is sodium silicate, potassium silicate or ammonium silicate.

10. The chrome-free passivating solution as claimed in claim 8, **characterized in that** the weight ratio between the oxysalt containing transition metal and the silicates is 35~45:1.

11. The chrome-free passivating solution as claimed in claim 2, **characterized in that** the complexing agent is organic acid or peroxide.

12. The chrome-free passivating solution as claimed in claim 2, **characterized in that** said organic acid is one or more selected from a group consisting of citric acid, tartaric acid, pyrophosphate acid, nitrilotriacetic acid, ethylene diamine tetramethyl phosphoric acid (EPTMP), sulfonamic acid, carboxyl acetic acid, ethylene diamine tetraacetic acid(EDTA), hydroxy-ethylidene diphosphonate (HEDP), 2-hydroxy phosphonoacetic acid, 1-hydroxy -2-naphthoic acid, diethylidene-triamine pentamethylene phosphonic(DTPMP), 1-hydroxy-2-(3-pyridyl) ethane-1,1-diphosphonic, hydroxyl-propylidene-1,1-diphosphonic(HPDP), 2-hydroxy phosphonoacetic acid (HPAA), 1-hydroxy butylidene -1,1-diphosphonic acid (HBDP), 1-hydroxy-ethylidene-1,1-diphosphonic acid (HDEP), 1-hydroxy-hydroxy-diphosphonic acid.

13. The chrome-free passivating solution as claimed in claim 12, **characterized in that** the complexing agent is a mixture of three organic acids, and the weight ratio of the three organic acids is 6:5:1.

14. The chrome-free passivating solution as claimed in claim 12, **characterized in that** the complexing agent is a mixture of two organic acids and peroxide, and the weight ratio of the two organic acids and peroxide is 6:5:1.

15. The chrome-free passivating solution as claimed in claim 1 or 2, **characterized in that** each liter of passivating solution contains the following components:
| | |
|---|---|
| oxysalts containing transition metal | 20~35g |
| complexing agent | 18~38g |
| inorganic acid | 0.05~0.15g |
| water | remains |

16. The chrome-free passivating solution as claimed in claim 15, **characterized in that** oxysalts containing transition metal are replaced with a mixture of said salt and silicate.
